# EUROPÄISCHE PATENTANMELDUNG

(11) **EP 0 545 203 A1**
(43) Veröffentlichungstag der Anmeldung: **09.06.1993**
(21) Anmeldenummer: 92119920.4
(22) Anmeldetag: 23.11.1992
(51) Int. Cl.: C09B 67/22, D06P 3/66

(54) **Reaktivfarbstoffmischungen**

(30) Priorität: 04.12.1991 DE 4139954
(71) Anmelder: BAYER AG, 51368 Leverkusen (DE)
(72) Erfinder: Schwarz, Max, Dr., W-5090 Leverkusen 3 (DE); Grütze, Joachim, Dr., W-5068 Odenthal (DE); Hildebrand, Dietrich, Dr., W-5068 Odenthal (DE); Wolff, Joachim, Dr., W-5068 Odenthal (DE); Stöhr, Frank-Michael, Dr., W-5068 Odenthal (DE)

(57) **Zusammenfassung**

Verbesserte Reaktivfarbstoffmischungen enthalten einen Reaktivfarbstoff der Formel (I) 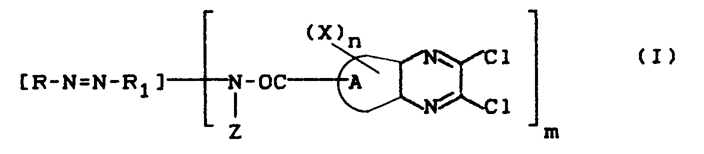
und einen Chlortriazinfarbstoff der Formel 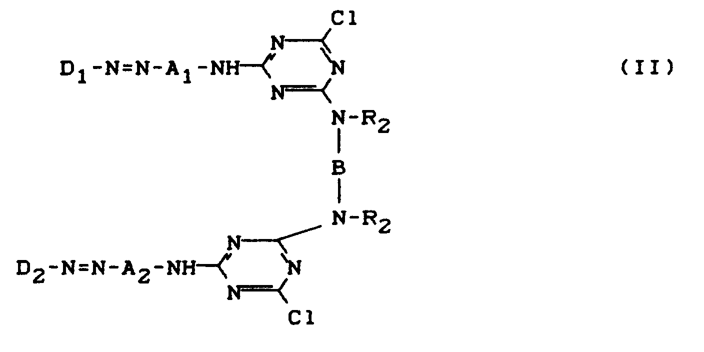
worin die Substituenten die in der Beschreibung angegebene Bedeutung haben.

## Beschreibung

Die Erfindung betrifft Mischungen von Reaktivfarbstoffen vorzugsweise gleicher Nuance und verschiedener Reaktivität und Substantivität, die beim Färben von Cellulose oder Celluloseregeneratfasern ein gegenüber den Einzelkomponenten verbessertes Aufziehverhalten besitzen.

Reaktivfarbstoffe werden in Form ihrer Einzelkomponenten oder in Form von Mischungen verschiedener Farbstoffe zum Färben von Cellulosefasern verwendet. Bei den Mischungen sollen die Reaktivitäten der Einzelkomponenten der Mischung möglichst gleich oder zumindest ähnlich sein, um die Kombinierbarket der Farbstoffe während des Färbevorgangs zu gewährleisten und somit ein "ruhiges", egales Warenbild zu erreichen. Besitzen Reaktivfarbstoffe stark unterschiedliche Reaktivitäten, so werden sie als voneinander verschiedenen Farbstoffsortimenten zugehörig angesehen, die nach unterschiedlichen Alkali- und Temperaturbedingungen angewandt werden müssen. Nach dem heutigen Sprachgebrauch werden die Reaktivfarbstoffe aufgrund ihrer unterschiedlichen Reaktivität in drei Gruppen eingeteilt: Hochreaktive Reaktivfarbstoffe, die bereits unter 40°C färbbar sind, bezeichnet man als Kaltfärber. Farbstoffe, die bei 40 bis 60°C angewandt werden, als Wärmefärber, und Farbstoffe, die im Bereich von 80°C angewandt werden, als Heißfärber. Aufgrund ihrer unterschiedlichen Reaktivität und Substantivität werden die drei unterschiedlich reaktiven Farbstoffsortimentsgruppen mittels gruppentypischer Verfahrensvorschriften appliziert.

Der Unterschied zwischen der Anwendung eines Warmfärbers und eines Heißfärbers besteht z.B. in einer beim Heißfärber um 20 bis 40°C höheren Färbetemperatur, in einer um 40 g/l Kochsalz höheren Elektrolytkonzentration und einer um 10 g/l höheren Sodakonzentration des Färbebades.

Der Erfindung liegt die Aufgabe zugrunde, eine Farbstoffmischung bereitzustellen, die bei guter Fixierausbeute einen gleichmäßigen Fixierkurvenverlauf zeigt, der dem der Einzelfarbstoffe überlegen ist.

Die Erfindung betrifft eine Reaktivfarbstoffmischung aus vorzugsweise nuancengleiche Töne ergebenden Farbstoffen, dadurch gekennzeichnet, daß jeweils wenigstens ein Farbstoff mit einer Dichlorchinoxalinreaktivgruppe der Formel 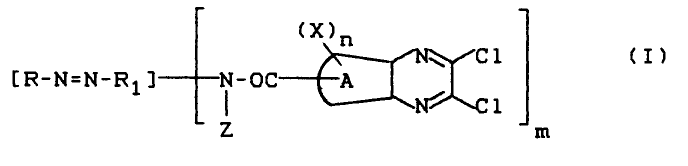
worin bedeuten
- A =: einen fünf- bis sechsgliedrigen carbocyclischen oder heterocyclischen Ring, insbesondere Phenyl,
- X =: Wasserstoff oder einen für Azofarbstoffe üblichen Substituenten, insbesondere gegebenenfalls substituierte Alkyl-, Aralkyl- und Arylreste, Sulfonsäure-, Carbonsäure-, Halogensubstituenten, wie Chlor- und Bromsubstituenten, ferner Nitro-, Hydroxy-, Alkoxy-, Cyan-, Sulfon- und gegebenenfalls substituierte Sulfonamidgruppen, Säureestergruppierungen, wie Sulfonsäure- und Carbonsäureestergruppen,
- Z =: Wasserstoff oder einen für Azofarbstoffe üblichen Substituenten, bevorzugt Wasserstoff oder eine Alkylgruppe,
- R =: den Rest einer gegebenenfalls weitere Azogruppen enthaltenden Diazokomponente der Benzol- oder Naphthalinreihe und
- R₁=: den Rest einer Azokomponente,
- m =: 1 oder 2, vorzugsweise 1,
- n =: eine ganze Zahl von 1 bis 3,
vorzugsweise der Formel I.1 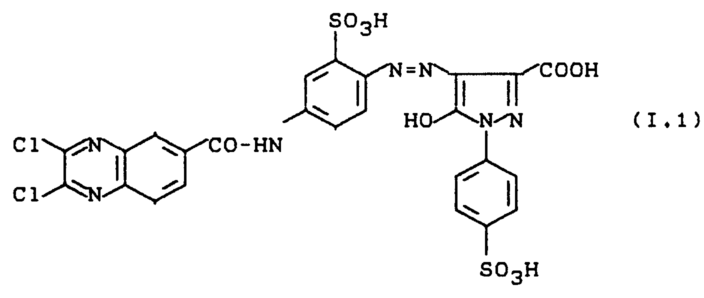
und wenigstens ein Chlortriazinfarbstoff der allgemeinen Formel (II) 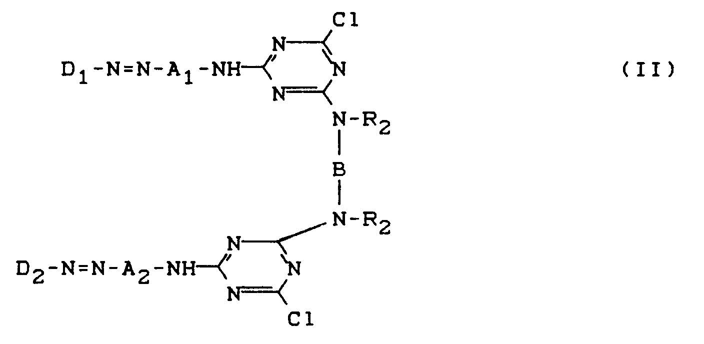
enthalten ist, worin bedeuten
R₂ = unabhängig voneinander H, C₁-C₄-Alkyl,
D₁, D₂ = Komponenten der Struktur 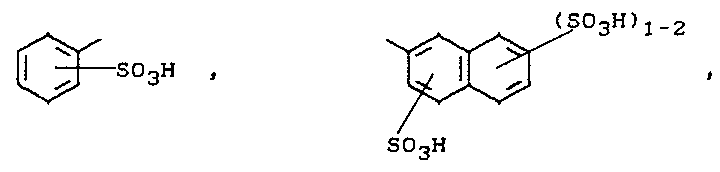 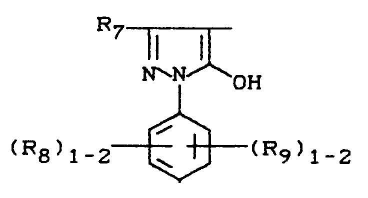
oder 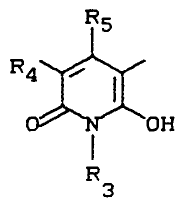
mit
R₃ = CH₃, C₂H₅
R₄ = COOH, CONH₂
R₅ = CH₃
R₇ = CH₃, COOH
R₈ = H, SO₃H
R₉ = H, Cl, CH₃
A₁, A₂ = unabhängig voneinander 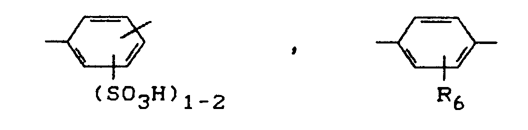
oder 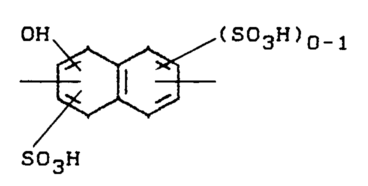
mit
R₆ = CH₃, C₂H₅, NHCO-NH₂, NH-CO-CH₃ 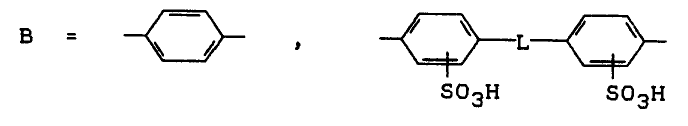
mit
L = einfache Bindung, NH-CO-NH, -CH=CH- .

Besonders bevorzugte Farbstoffe II sind: 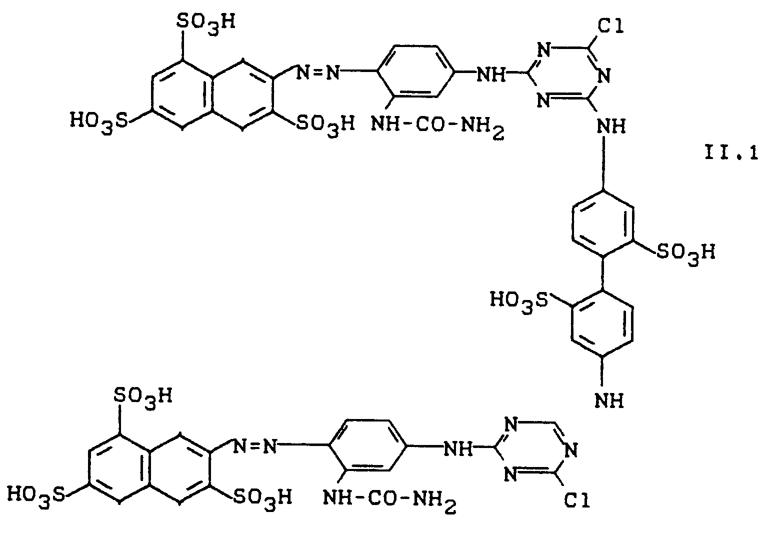
oder 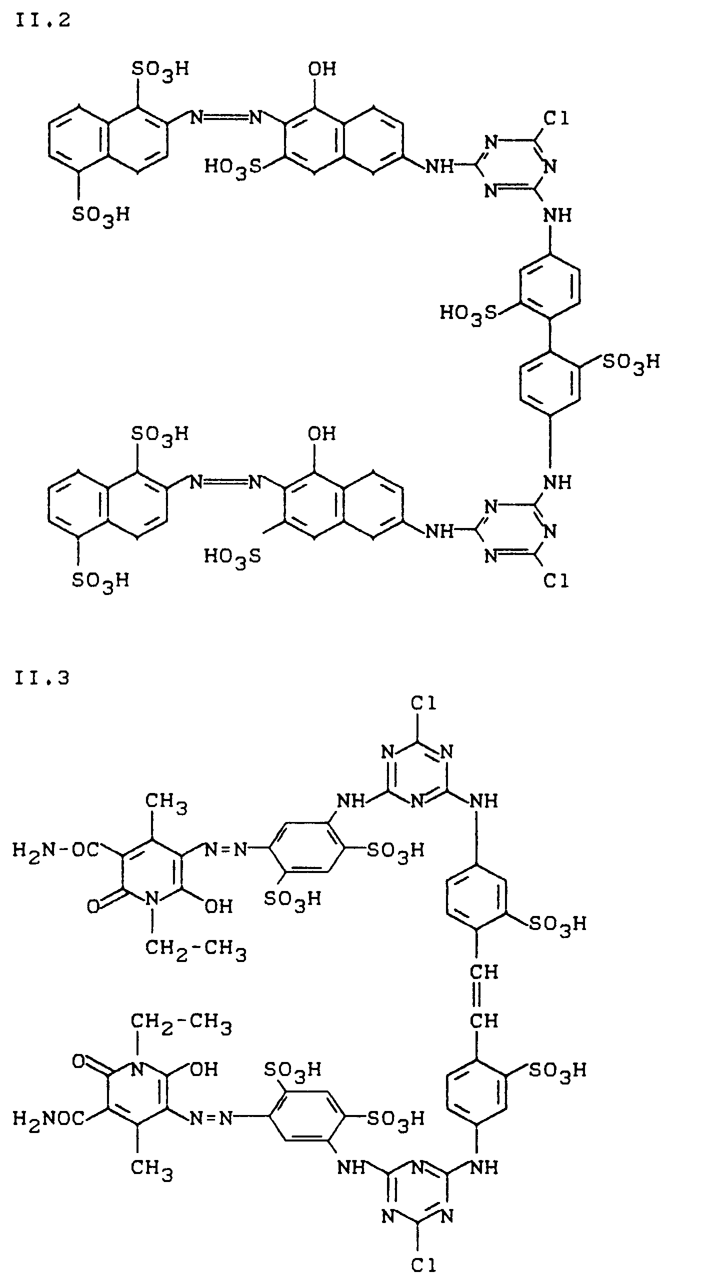 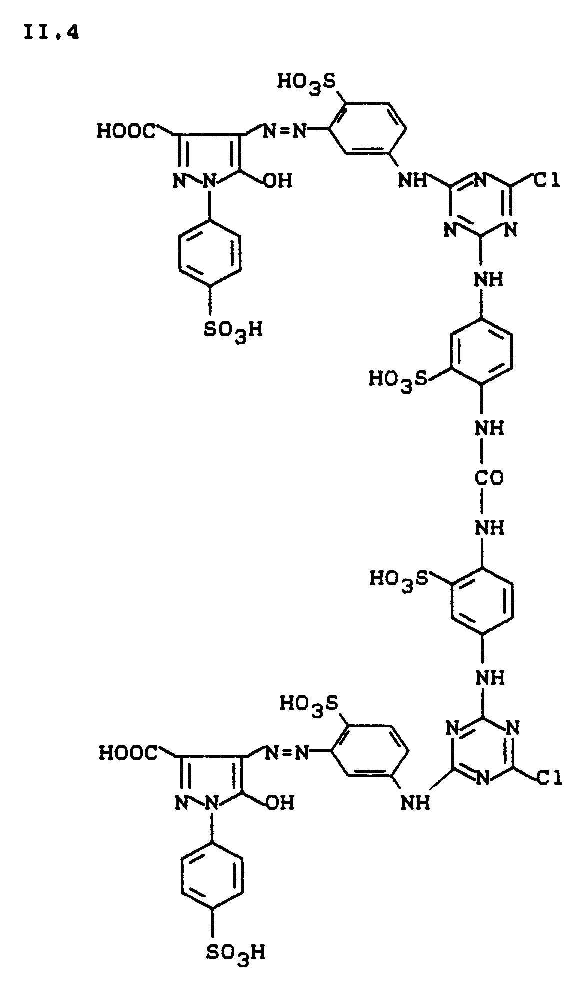
Aus EP-A-478 503 sind bereits Farbstoffmischungen bekannt, die Farbstoffe der Formel (II) enthalten können. Jedoch findet sich kein Hinweis auf die Verwendung von Farbstoffen der Formel (I).

Die Farbstoffmischung kann vorzugsweise zum Färben von Baumwolle und anderen Cellulosefasern im Ausziehverfahren auf üblichen Färbeaggregaten verwendet werden.

Färbetemperaturen von 40°C bis 80°C sind möglich, die bevorzugte Färbetemperatur ist 60°C, die bevorzugte Starttemperatur 30°C, gemäß folgendem Färbeschema.

| Zeit (Min) | Temperatur (°C) | Maßnahme |
|---|---|---|
| 0 | 30 | Farbstoffzusatz |
| 10 | 30 | Zusatz von Salz, insbesondere Na₂SO₄, NaCl |
| 30 | 30 | Zusatz von Fixiermittel, insbesondere Soda, NaOH |
| 60 | 30 → 60 | Aufheizen auf 60°C |

Die bevorzugten Reaktiv-Farbstoffmischungen enthalten 20 bis 80 Gew.-Teile wenigstens eines Farbstoffs der Formel (I) und 80 bis 20 Gew.-Teile wenigstens eines Farbstoffs der Formel (II), wobei sich diese Gew.-Teile auf 100 ergänzen. Zusätzlich können weitere Farbstoffe oder übliche Hilfsmittel eingesetzt werden. Insbesondere enthalten die erfindungsgemäßen Farbstoffmischungen pro 100 Teile Farbstoff 1 bis 50 Teile eines anorganischen Salzes wie beispielsweise Kochsalz oder Natriumsulfat. Die erfindungsgemäßen Mischungen enthalten weiterhin vorzugsweise einen Puffer, insbesondere einen anorganischen Puffer, der einen Pufferungsbereich zwischen pH von 6,5 bis 7,5 ergibt. Zur besseren Handhabung enthalten die erfindungsgemäßen Mischungen vorzugsweise Dispergiermittel, insbesondere 0,5 bis 10 Gew.-Teile eines organischen, anionischen Dispergiermittels, bezogen auf die gesamte Mischung und ein Entstaubungsmittel, vorzugsweise 0,5 bis 5 Gew.-Teile, bezogen auf die gesamte Mischung.

### Beispiel

1000 Teile einer wäßrigen Färbeflotte werden bei 30°C mit 100 Teilen Baumwollwirkware und 2 Teilen Reaktivfarbstoffmischung versetzt. Diese Mischung besteht aus je 1 Teil des Farbstoffs der Formel (I.1) und des Farbstoffs der Formel (II.1).

Nachdem sich die Farbstoffmischung gleichmäßig in der Flotte und auf der Baumwolle verteilt hat, werden 50 Teile Natriumchlorid in die Färbeflotte gegeben und anschließend 20 Teile Natriumcarbonat hinzugefügt. Die Färbeflotte wird bei lebhafter Flotten- und Warenbewegung innerhalb 30 Minuten auf 60°C erwärmt und bei dieser Temperatur 90 Minuten belassen.

Danach wird die Flotte abgelassen, zweimal bei 50°C und zweimal bei 80°C gespült. Anschließend wird 15 Minuten kochend geseift und kalt gespült. Man erhält eine egale Goldgelbfärbung mit guten Echtheitseigenschaften.

Wird die Färbung mit einer Mischung der Farbstoffe I und II durchgeführt, dann zeigen die Einzelkomponenten in der Mischung ein gegenüber dem Typfarbstoff harmonischeres Aufziehverhalten, welches sich in einer gegenüber der Aufziehkurve von I flacheren und gegenüber der Aufziehkure II steileren Aufziehkurve äußert, d.h. der reaktionsträgere Farbstoff (Formel II) fixiert in der beanspruchten Mischung (I + II) bei gleichen Fixierbedingungen schneller als seinem Fixierverhalten als Typ entspricht.

Bei Färbungen im Temperaturbereich 30°C nach 60°C, gemäß oben angegebenem Färbeschema ist bei mittelreaktiven Farbstoffen damit zu rechnen, daß die Fixierung bei den eingesetzten Fixiermittelmengen (20 g/l Natriumcarbonat) sehr schnell geschieht.

Damit ergibt sich nach heutigem Stand der Technik eine erhebliche Gefahr von Unegalitäten. Dagegen bewirkt die Anwendung von wenig reaktiven Farbstoffen unter diesen Bedingungen nur eine geringe Fixierung zu Beginn der Färbung und eine allmähliche Steigerung der Fixiergeschwindigkeit während der Aufheizphase.

Unerwartet und überraschend ist die Tatsache, daß die miteinander gemischten Farbstoffe eine gemeinsame Fixierkurve durchlaufen, die ein Maß für die positive gegenseitige Beeinflussung der Farbstoffe ist.

Weiterhin ist es überraschend, daß die reaktivere Mischungskomponente trotz der scheinbar zu scharf gewählten Fixierbedingungen das Material gleichmäßig und mit hoher Ausbeute anfärbt. Die weniger reaktive Mischungskomponente erreicht andererseits trotz der scheinbar zu "milden" Reaktionsbedingungen gute Endausbeuten.

## Patentansprüche

1. Farbstoffmischung enthaltend wenigstens zwei Reaktivfarbstoffe, dadurch gekennzeichnet, daß jeweils wenigstens ein Farbstoff mit einem Dichlorchinoxalinreaktivrest der Formel 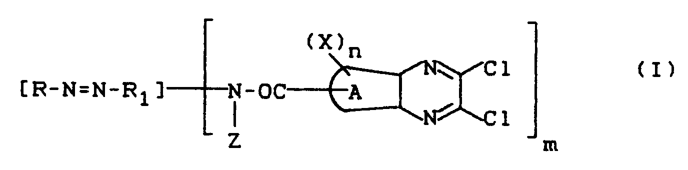 worin bedeuten
A = einen fünf- bis sechsgliedrigen carbocyclischen oder heterocyclischen Ring,
X = Wasserstoff oder einen für Azofarbstoffe üblichen Substituenten,
Z = Wasserstoff oder einen für Azofarbstoffe üblichen Substituenten,
R = den Rest einer gegebenenfalls weitere Azogruppen enthaltenden Diazokomponente der Benzol- oder Naphthalinreihe,
R₁ = den Rest einer Azokomponente,
m = 1 oder 2,
n = eine ganze Zahl von 1 bis 3,
und ein Chlortriazinfarbstoff der allgemeinen Formel (II) 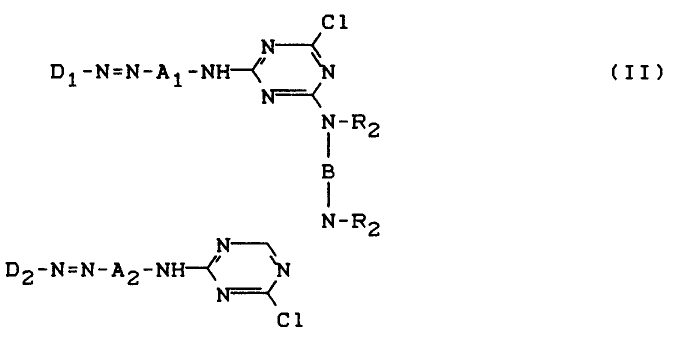 worin bedeuten
R₂ = unabhängig voneinander H, C₁-C₄-Alkyl,
D₁, D₂ = Komponenten der Struktur 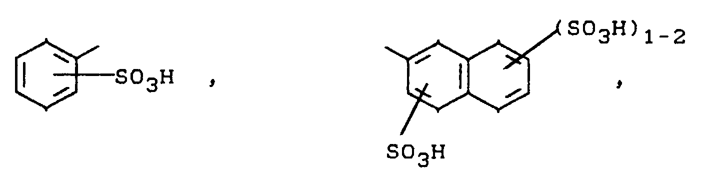 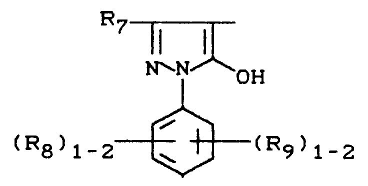 oder 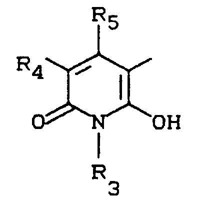 mit
R₃ = CH₃, C₂H₅
R₄ = COOH, CONH₂
R₅ = CH₃
R₇ = CH₃, COOH
R₈ = H, SO₃H
R₉ = H, Cl, CH₃
A₁, A₂ = unabhängig voneinander 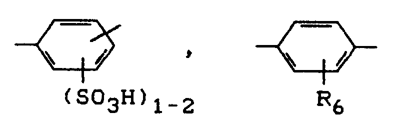 oder 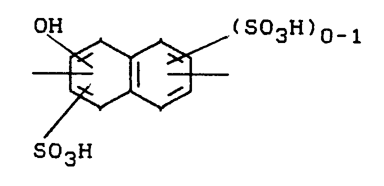 mit
R₆ = CH₃, C₂H₅, NHCO-NH₂, NH-CO-CH₃ 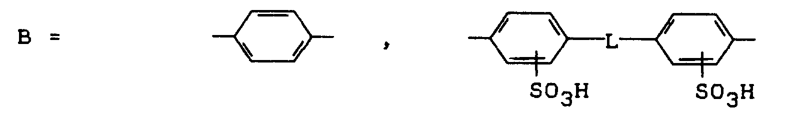 mit
L = einfache Bindung, NH-CO-NH oder -CH=CH-
enthalten sind.

2. Farbstoffmischung gemäß Anspruch 1, dadurch gekennzeichnet, daß die Farbstoffe die gleiche Farbnuance aufweisen.

3. Farbstoffmischung gemäß wenigstens einem der vorhergehenden Ansprüche, dadurch gekennzeichnet, daß enthalten sind ein Farbstoff der Formel 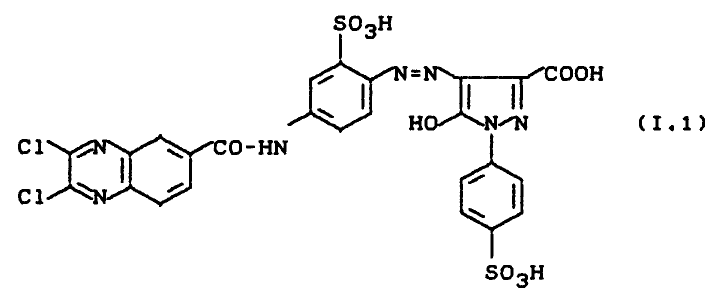 und wenigstens einer der Farbstoffe 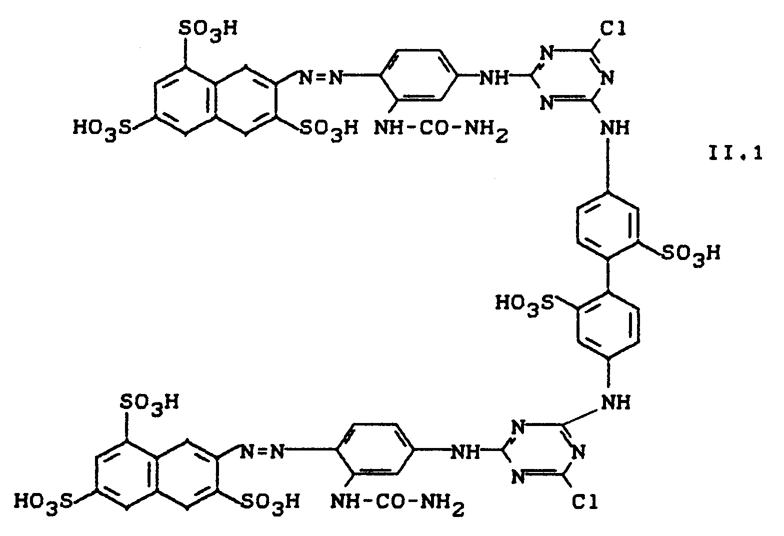 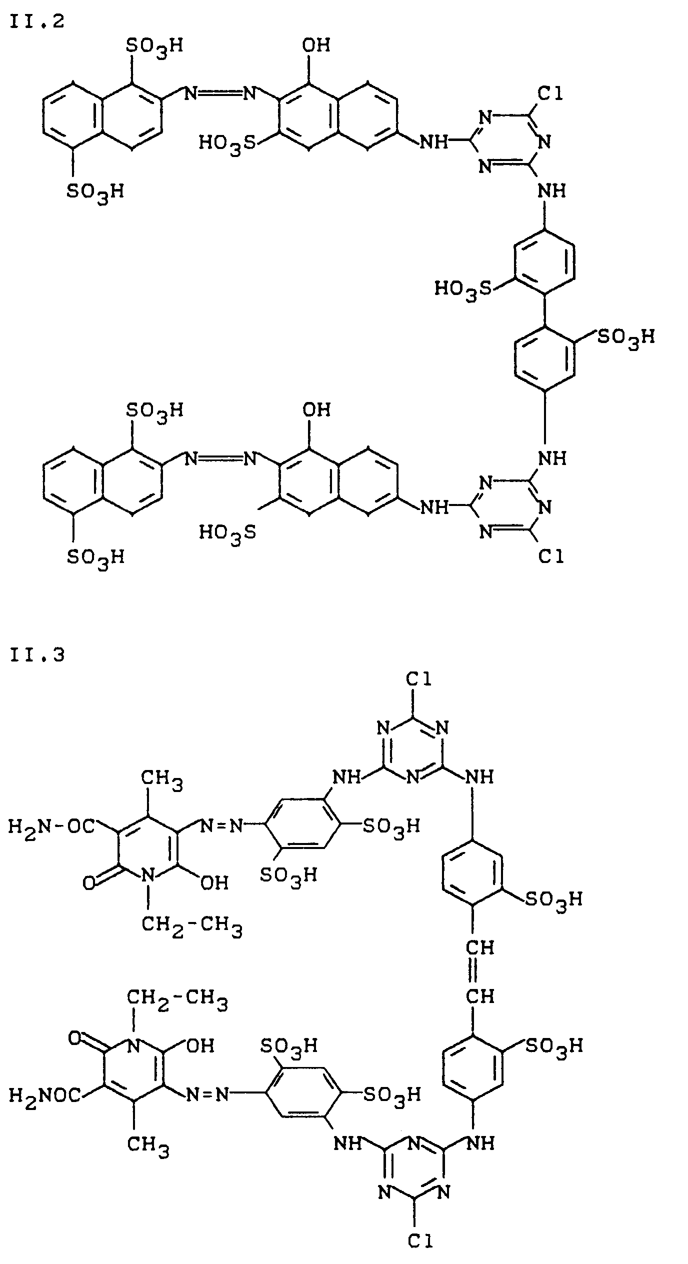 oder

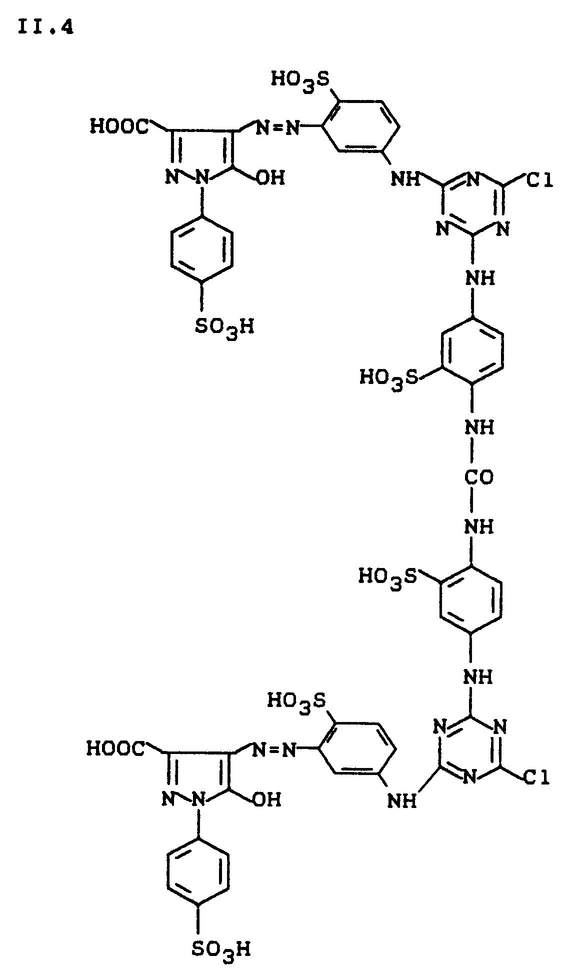

4. Reaktivfarbstoffmischung gemäß wenigstens einem der vorhergehenden Ansprüche, dadurch gekennzeichnet, daß sie 20 bis 80 Gewichtsteile des Farbstoffs der Formel (I) und 80 bis 20 Gewichtsteile des Farbstoffs der Formel (II) enthält.

5. Mischungen gemäß wenigstens einem der vorhergehenden Ansprüche, dadurch gekennzeichnet, daß die Farbstoffmischung pro 100 Gewichtsteile Mischfarbstoff 1 bis 50 Gewichtsteile eines anorganischen Salzes enthält.

6. Mischungen gemäß wenigstens einem der vorhergehenden Ansprüche, dadurch gekennzeichnet, daß 100 Gewichtsteile des Mischfarbstoffs 1 bis 5 Gewichtsteile eines anorganischen Puffers enthalten.

7. Mischung gemäß wenigstens einem der vorhergehenden Ansprüche, dadurch gekennzeichnet, daß die Mischung 0,5 bis 10 Gewichtsteile eines handelsüblichen organischen, anionischen Dispergiermittels enthält.

8. Mischung gemäß wenigstens einem der vorhergehenden Ansprüche, dadurch gekennzeichnet, daß die Mischung 0,5 bis 5 Gewichtsteile eines handelsüblichen Entstaubungsmittels enthält.

9. Verfahren zum Färben von Baumwolle und Baumwollmischfasern mit einer Mischung aus wenigstens zwei Reaktivfarbstoffen, dadurch gekennzeichnet, daß eine Mischung gemäß wenigstens einem der vorhergehenden Ansprüche verwendet wird.
